# EUROPEAN PATENT APPLICATION

(11) **EP 2 056 287 A2**
(43) Date of publication of application: **06.05.2009**
(21) Application number: 08253477.7
(22) Date of filing: 24.10.2008
(51) Int. Cl.: G09G 3/36

(54) **Liquid crystal display device**

(30) Priority: 02.11.2007 JP 2007285835; 12.12.2007 JP 2007320409; 25.09.2008 JP 2008246081
(71) Applicant: Epson Imaging Devices Corporation, Azumino-shi Nagano 399-8285 (JP)
(72) Inventor: Fujimura, Norio c/o Epson Imaging Devices Corporation, Azumino-shi, Nagano 399-8285 (JP)
(74) Representative: Cloughley, Peter Andrew

(57) **Abstract**

A liquid crystal display device includes a display unit including a plurality of gate lines and a plurality of signal lines, a scanning unit that sequentially scans lines corresponding to the plurality of signal lines, a memory circuit that stores video data based on a scanning signal from the scanning unit, and a selection circuit, to which signals formed of two values are supplied, that selects one of the signals formed of the two values based on the video data stored in the memory circuit and supplies the selected signal to one of the plurality of the signal lines as a video signal.

## Description

The present invention relates to a liquid crystal display device, and more particularly, to a liquid crystal display device having a display unit including a plurality of signal lines.

Generally, liquid crystal display devices each having a display unit including a plurality of signal lines have been known (for example, see JP-A-11-109926).

In JP-A-11-109926, a plurality of pixels, a plurality of signal lines connected to the plurality of pixels, H switches that are connected to the plurality of signal lines and have switching units corresponding to the plurality of signal lines, and a shift register that is connected to the H switches and supplies an operation signal used for performing on/off operations for the switching units of the H switches are included. In the liquid crystal display device disclosed in JP-A-11-109926, when video signals are written into the plurality of pixels, the video signals are supplied to the H switches, and scanning signals are sequentially supplied from the shift register to the H switches. Then, the H switches sequentially become in the ON state for each predetermined period based on the scanning signals from the shift register (dot-sequential), and the video signals are supplied to the plurality of signal lines by using a dot-sequential method.

However, in the liquid crystal display device described in JP-A-11-109926, by performing shifting operations between on and off states of the video signals using the H switches in a dot-sequential method, writing operations for the plurality of pixels are performed for each predetermined period by using a dot-sequential method. Accordingly, when the resolution of the display unit increases (the number of the pixels increases), a writing period for one pixel within a writing period for pixels of one line needs to be shortened. In such a case, since the writing period for one pixel is shortened, there is a problem that the writing operation for each pixel cannot be performed sufficiently.

An advantage of some aspects of the invention is that it provides a liquid crystal display device capable of sufficiently performing a writing operation for each pixel even in a case where the resolution is increased.

According to an aspect of the invention, there is provided a liquid crystal display device including: a display unit including a plurality of gate lines and a plurality of signal lines; a scanning unit that sequentially scans lines corresponding to the plurality of signal lines; a memory circuit that stores video data based on a scanning signal from the scanning unit; and a selection circuit, to which signals formed of two values are supplied, that selects one of the signals formed of the two values based on the video data stored in the memory circuit and supplies the selected signal to one of the plurality of the signal lines as a video signal.

In the liquid crystal display device according to the aspect above, as described above, the memory circuit that stores video data based on the scanning signal from the scanning unit and the selection circuit, to which the signals formed of two values are supplied, that selects one of the signals formed of the two values based on the video data stored in the memory circuit and supplies the selected signal to the signal line as the video signal are configured. Accordingly, during the period in which the video data is stored in the memory circuit, the signal is selected all the time and the selected signal can be continuously supplied to the signal line as the video signal. Thus, the writing period for each pixel can be extended even when the resolution is increased. As a result, differently from a case where video signals are sequentially written for each predetermined period by using a point-sequential method, the writing operation can be sufficiently performed for each pixel.

In the above-described liquid crystal display device, it is preferable that the memory circuit is configured to maintain the video data in a period longer than a scanning period of the scanning unit for a line corresponding to one of the plurality of the signal lines, and, for a period in which the video data is maintained in the memory circuit, the signal is selected based on the video data stored in the memory circuit by the selection circuit and is supplied to the one of the plurality of signal lines as the video signal. In such a case, the writing period (a period for supplying the video signal to the signal line) according to an embodiment of the invention which is the period for supplying data by using the memory circuit can be extended in an easy manner, compared to a writing period (a period for supplying the video signal to the signal line) by using a dot-sequential method in which a scanning period of the scanning unit for one signal line becomes the writing period for each pixel.

In the above-described liquid crystal display device, it is preferable that the video data stored in the memory circuit is maintained for one horizontal period, and the selection circuit selects the signal based on the video data that is maintained for the one horizontal period and supplies the selected signal to the one of the plurality of signal lines as the video signal for the one horizontal period. In such a case, the video signal selected based on the maintained video data can be supplied to the signal line for one horizontal period. Accordingly, by maintaining the gate of the pixel transistor to be in the ON state, the writing operation for each pixel can be performed for a long time in an easy manner.

In the above-described liquid crystal display device, it is preferable that the memory circuit includes: a memory unit; that is connected to the selection circuit and stores the video data; and a switching unit that is connected between a data line for supplying the video data and the memory unit and electrically connects the data line and the memory unit based on the scanning signal from the scanning unit. In such a case, by performing on/off control for the switching unit using the sequentially supplied scanning signals, timings for storing the video data in the memory unit can be configured to be different for each signal line. Thus, timings for starting supply of the video signals in a case where the video signal is supplied to each signal line based on the video data stored in the memory unit can be configured to be different for each signal line. Accordingly, the writing operation of the video signal for each pixel can be sequentially performed in an easy manner.

In the above-described liquid crystal display device, it is preferable that one set configured by the memory circuit and the selection circuit is disposed for each of the plurality of the signal lines. In such a case, the video signals can be supplied to each signal line for a long period by using the memory circuit and the selection circuit in an easy manner.

In the above-described liquid crystal display device, it is preferable that the liquid crystal display device further includes a first signal line that is connected to the selection circuit and supplies a first signal and a second signal line that supplies a second signal. In such a case, it is preferable that the signals formed of two values are formed of the first signal and the second signal, the selection circuit includes a first signal switching unit and a second signal switching unit, and the first signal switching unit is connected between one of the plurality of signal lines and the first signal line, and the second signal switching unit is connected between the one of the plurality of signal lines and the second signal line. When the video data corresponding to the first signal is maintained in the memory circuit, the first signal switching unit is in an ON state so as to supply the first signal from the first signal line to the one of the plurality of signal lines as the video signal, and when the video data corresponding to the second signal is maintained in the memory circuit, the second signal switching unit is the ON state so as to supply the second signal from the second signal line to the one of the plurality of signal lines as the video signal. In such a case, in a state that one between the first and second video data is maintained in the memory circuit, a switching unit between the first signal switching unit and the second signal switching unit that is in correspondence with the maintained video data becomes in the ON state, and the signal is supplied to the signal line as the video signal through the switching unit that is in the ON state. Thus, a signal can be selected automatically in accordance with the video data and can be supplied to the signal line as the video signal. Accordingly, writing a signal into the pixel can be performed without performing a complicated control operation.

In the above-described liquid crystal display device, it is preferable that the selection circuit and the one of the plurality of signal lines are directly connected to each other, not through a switching circuit. In such a case, when a video signal is supplied to the signal line, a switching circuit such as an H switch is not needed to be disposed, and thereby complexity of the circuit configuration between the selection circuit and the signal line can be suppressed.

In the above-described liquid crystal display device, it is preferable that scanning signals are simultaneously supplied from the scanning unit to the memory circuit corresponding to the one of the plurality of signal lines that is in correspondence with sub pixels of red, green, and blue colors constituting one pixel. In such a case, operations for storing the video data in the memory circuits corresponding to the signal lines that are in correspondence with the pixels of the red color, the green color, and the blue color that constitute one pixel can be performed simultaneously.

In the above-described liquid crystal display device, it is preferable that the liquid crystal display device further includes: a pixel transistor; and a gate line driving circuit that performs on/off control for the pixel transistor through the gate line, and, in the one horizontal period constituted by a writing period of the video signal for pixels of one line of the plurality of the gate lines and a blanking interval required for transiting to a writing operation for the next line from a writing operation for a line in which the writing operation for the display pixels is completed, the gate line driving circuit controls the pixel transistor to be in the ON state not only for the writing period but also for a predetermined period within the transition period immediately following the writing period. In such a case, in one horizontal period, the writing operation for the pixel, for which the writing operation is performed late in the one horizontal period, can be performed in the predetermined period within the transition period, and thereby long writing periods for all the pixels can be acquired. As a result, the writing operations for all the pixels can be performed sufficiently.

In such a case, it is preferable that the predetermined period of the transition period is a period in which a writing operation for the pixel, for which the writing operation is performed last in the writing period of the one horizontal period, can be completed. In such a case, the writing periods for all the pixels can be sufficiently acquired for performing the writing operation for the pixels of one line.

In the above-described liquid crystal display device, it is preferable that the liquid crystal display device further includes: a pixel transistor; and a gate line driving circuit that performs on/off control for the pixel transistor, wherein the gate line driving circuit, the memory circuit, the selection circuit, and the scanning unit are disposed in a liquid crystal panel including the display unit. In such a case, a simplified structure and miniaturization of the device, compared to a case where the gate line driving circuit, the memory circuit, the selection circuit, and the scanning unit are disposed outside the liquid crystal panel, can be implemented.

Embodiments of the invention will be described by way of example only with reference to the accompanying drawings, wherein like numbers reference like elements.

Fig. 1 is a block diagram showing the whole configuration of a liquid crystal display device according to an embodiment of the invention.

Fig. 2 is a circuit diagram showing the configuration of a latch circuit and a selection circuit of a liquid crystal display device according to an embodiment of the invention.

Fig. 3 is a timing chart for writing a signal into a display pixel of a liquid crystal display device according to an embodiment of the invention.

Fig. 4 is a diagram showing an example of an electronic apparatus using a liquid crystal display device according to an embodiment of the invention.

Fig. 5 is a diagram showing an example of an electronic apparatus using a liquid crystal display device according to an embodiment of the invention.

Fig. 6 is a diagram showing an example of an electronic apparatus using a liquid crystal display device according to an embodiment of the invention.

Hereinafter, embodiments of the present invention will be described with reference to the accompanying drawings.

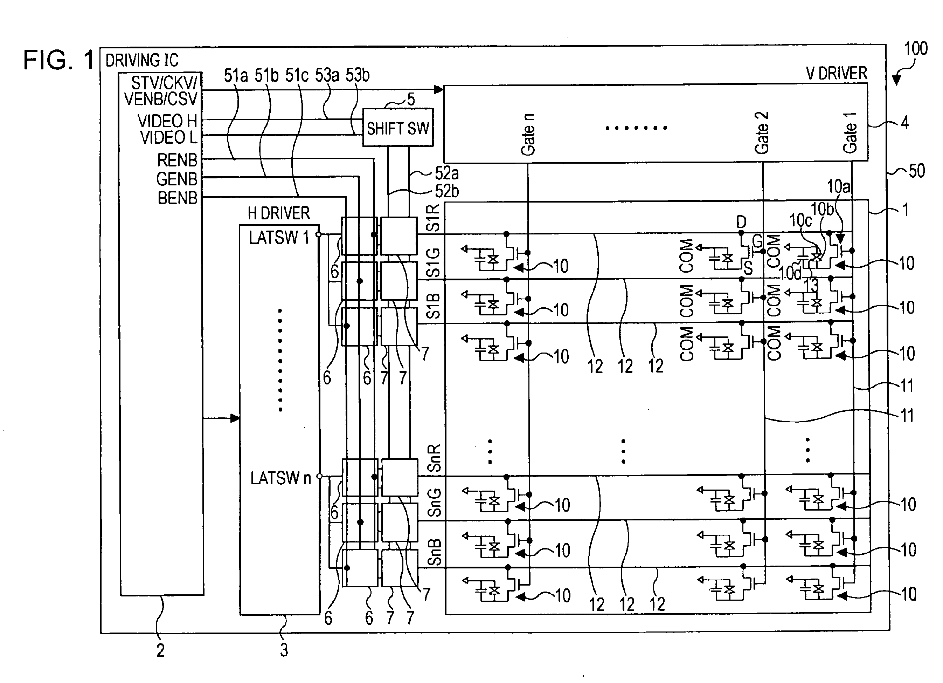

First, the configuration of the liquid crystal display device 100 according to an embodiment of the invention will be described with reference to Figs. 1 to 3.

The liquid crystal display device 100 according to an embodiment of the invention, as shown in Fig. 1, has a display unit 1, a driving IC 2, an H driver 3, a V driver 4, a shift switch 5, a latch circuit 6, and a selection circuit 7 inside a liquid crystal panel 50. The driving IC 2 has a function for controlling the overall operation of the liquid crystal display device 100. The H driver 3 has a function for sequentially supplying scanning signals to the latch circuit 6 to be described later. The V driver 4 serves as a driving circuit for a gate line 11 to be described later. In addition, the driving IC 2 is integrally formed on a glass substrate (not shown) of the liquid crystal panel 50 by using a chip-on-glass method. In addition, the H driver 3, the V driver 4, the shift switch 5, the latch circuit 6, and the selection circuit 7 are formed in a substrate in which a pixel electrode 10b is formed by using a system-on-glass (SOG) method in which circuit integration is performed on a glass substrate by using low-temperature poly silicon technology. Accordingly, the number of semiconductor parts can be decreased, the assembly operation can be performed in a simple manner, and an external circuit substrate can be decreased in size. Therefore, miniaturization, light weight, and low cost of the liquid crystal display device can be implemented on the whole. Here, the H driver 3 and the V driver 4 are examples of a scanning unit and a gate line driving circuit according to an embodiment of the invention.

In the display unit 1, a plurality of display pixels 10 disposed in a matrix shape and a plurality of gate lines 11 and a plurality of signal lines 12 that are disposed perpendicular to each other are disposed. The display pixels 10 are disposed in positions in which the gate lines 11 and the signal lines 12 intersect each other. In addition, the plurality of gate lines 11 are connected to the V driver 4, and the plurality of signal lines 12 are connected to the selection circuit 7. Each display pixel 10 is configured by a pixel transistor 10a (TFT), a pixel electrode 10b, an opposing electrode 10c that is disposed in a position for facing the pixel electrode 10b, and an auxiliary capacitor 10d. In addition, between the pixel electrode 10b and the opposing electrode 10c of the display pixel 10, a liquid crystal 13 is disposed. In addition, a drain area D of the pixel transistor 10a is connected to the signal line 12, and a source area S is connected to electrodes of the pixel electrode 10b and the auxiliary capacitor 10d on one side. In addition, a gate G of the pixel transistor 10a is connected to the gate line 11. Accordingly, when the scanning signal of level H (ON signal) is supplied to the gate G from the V driver 4 through the gate line 11, the pixel transistor 10a is configured to be in the ON state. In addition, by supplying any one signal between signals (VIDEO H and VIDEO L shown in Fig. 1) formed of two values of level H and level L that are supplied from the driving IC 2 through the shift switch 5 and the selection circuit 7 to the pixel electrode 10b through the signal line 12 and the drain D and source S of the pixel transistor 10a as a video signal, the electric potential of the pixel electrode 10b is configured to be controlled.

In addition, the opposing electrode 10c is connected to a COM, and the electric potential of the opposing electrode is configured to be controlled by the COM. Accordingly, an electric potential difference between the pixel electrode 10b and the opposing electrode 10c is applied to the liquid crystal 13. Then, as alignment of the liquid crystal molecules changes in accordance with the magnitude of the electric potential difference applied to the liquid crystal 13, the index of refraction of light incident to the liquid crystal 13 from a light source (not shown) is configured to be changed. In addition, in this embodiment, the alignment of the liquid crystal molecules changes to one alignment between alignment for which light is transmitted to a monitor surface (color is displayed) and alignment for which light is not transmitted to the monitor surface (color is not displayed) based on the difference between the electric potentials of the pixel electrodes 10b caused by the video signal of level H or level L configured by two values and the electric potential of the opposing electrode 10c corresponding to the control of the COM. One display pixel 10 is configured as one sub pixel corresponding to one color of a red color, a green color, and a blue color, and one pixel is configured by three display pixels 10 corresponding to the red color, the green color, and the blue color. In other words, in this embodiment, an 8-color display format by using a combination of each color display of the red color, the green color, and the blue color and non-display is used. The display pixel 10 (one sub pixel) is an example of a sub pixel according to an embodiment of the invention, and the COM is an example of an opposing electric potential supplying unit according to an embodiment of the invention.

Here, in this embodiment, to each of the plurality of scanning lines 12, one set of the latch circuit 6 and the selection circuit 7 is connected. In particular, the selection circuit 7 is connected to the signal line 12, and the latch circuit 6 is connected to the selection circuit 7. In addition, the latch circuits 6 that are connected to three signal lines 12 corresponding to each color are connected in parallel with one another, and each one set of the latch circuits 6 connected in parallel is connected to the H driver 3. In addition, the data lines 51a, 51b, and 51c from the driving IC 2 are connected to the latch circuits 6 of the signal lines 12 corresponding to each color. The data lines 51a, 51 b, and 51c are configured to supply enable signals RENB, GENB, and BENB for video data of the red color, the green color, and the blue color. In addition, the data lines 51 a, 51 b, and 51 c are connected to all the latch circuits 6 corresponding to colors that are in correspondence with the data lines 51 a, 51 b, and 51 c. Accordingly, the enable signals RENB, GENB, and BENB for video data of each color are configured to be supplied to all the latch circuits 6 corresponding to the respective color from the driving IC 2. In addition, the video data of each color is formed of one of two values of level H and level L, and the video data of level H is configured to be a signal corresponding to a video signal for displaying the color. On the other hand, the video data of level L is configured to be a signal corresponding to a signal for not displaying the color. In addition, each latch circuit 6 is configured to latch (store) video data of each color supplied through the data lines 51 a, 51 b, and 51 c based on the scanning signal supplied from the H driver 3. In addition, the selection circuit 7 that is connected to the latch circuit 6 is connected to the shift switch 5 through a first signal line 52a and a second signal line 52b used for supplying signals formed of two values. Here, the latch circuit 6 is an example of a memory circuit according to an embodiment of the invention.

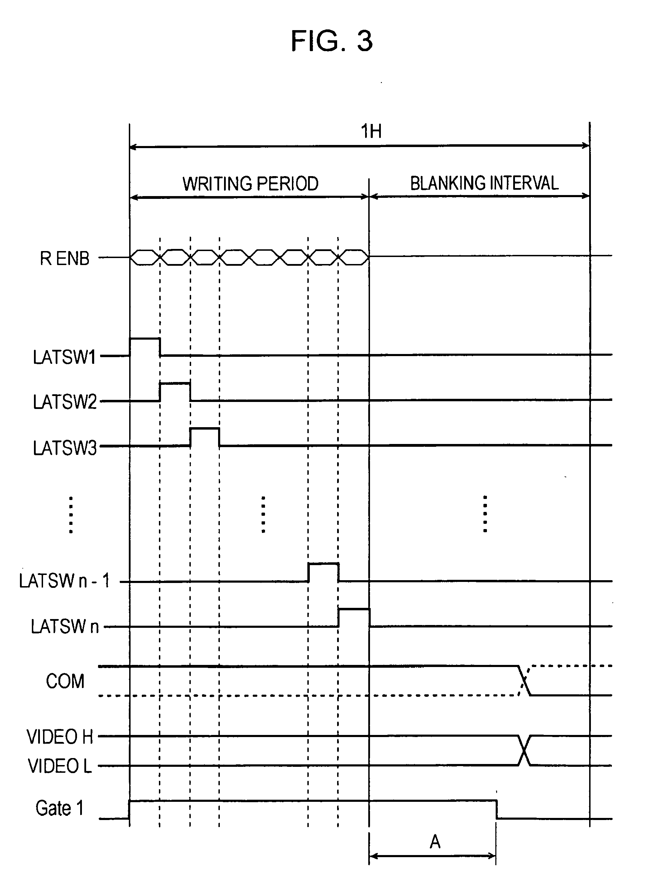

In this embodiment, the shift switch 5 is connected to the driving IC 2 through an H-level signal line 53a and a L-level signal line 53b used for supplying signals (VIDEO H and VIDEO L shown in Fig. 1) formed of two values. The signals of level H and level L that are supplied from the driving IC 2 are configured to be output to the first signal line 52a and the second signal line 52b through the shift switch 5. The shift switch 5 has a function for shifting between the signal of level H and the signal of level L to be output alternately from the first signal line 52a and the second signal line 52b at each one horizontal period in which an operation for writing a signal into the display pixels 10 of one line is performed. In addition, the electric potential of the opposing electrode 10c is configured to be controlled by using a so-called COM inverting driving method in which the electric potential is controlled to be inverted for each one horizontal period. In addition, the shifting operation of the shift switch 5 is configured to be synchronized with an operation for inverting the electric potential of the opposing electrode 10c by using the COM (not shown). In other words, the previous shift between signal lines from which signals having two values are output and inversion of the COM are configured to be performed simultaneously. In addition, one horizontal period, as shown in Fig. 3, is configured by a video signal writing period for the display pixels 10 of one line and a blanking interval (transition interval) required for transiting to a writing operation for the next line from the line in which the writing operation for the display pixels 10 is completed.

In this embodiment, when the video data is stored in the latch circuit 6, the selection circuit 7 is configured to supply an signal that is supplied to an signal line on a side corresponding to the video data stored in the latch circuit 6 between the first signal lines 52a and the second signal lines 52b to the signal line 12. In particular, when the video data of level H is stored, a video signal is configured to be supplied from the first signal line 52a to the signal line 12. On the other hand, when the video data of level L is stored, a video signal is configured to be supplied from the second signal line 52b to the signal line 12. In addition, signal lines to which the video signals of level H and level L are output, as described above, are shifted between the first signal line 52a and the second signal line 52b for each one horizontal period, and the electric potential of the opposing electrode 10c is configured to be inverted simultaneously by using the COM. Accordingly, even when the level of an signal supplied from the first signal line 52a to the pixel electrode 10b and the level of a video signal supplied from the second signal line 52b to the pixel electrode 10b are inverted, the electric potential difference between the pixel electrode 10b and the opposing electrode 10c does not change. In other words, a signal for displaying a color is configured to be supplied from the first signal line 52a, and a signal for not displaying a color is configured to be supplied from the second signal line 52b.

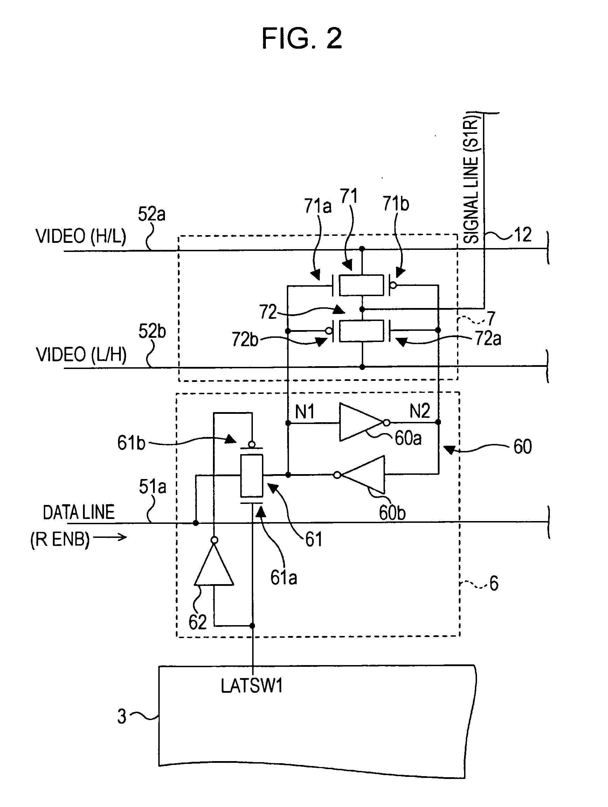

In addition, in this embodiment, as shown in Fig. 2, in the latch circuit 6, a latch unit 60 and a switching unit 61 are disposed. The latch unit 60 is connected to the selection circuit 7 and latches (stores) the video data. The switching unit 61 is connected between the data line 51 a (51 b or 51 c) supplying the video data of each color and the latch unit 60 and electrically connects the data line 51 a and the latch unit 60 based on the scanning signal from the H driver 3. The latch unit 60 is configured by two inverters 60a and 60b that are connected in parallel with each other by connecting input parts thereof to output parts. In addition, the switching unit 61 is configured by a transfer gate transistor in which an n-type transistor 61 a and a p-type transistor 61 b are connected in parallel. The H driver 3 is connected to a gate of the n-type transistor 61 a and is connected to a gate of the p-type transistor 61 b through an inverter 62. In addition, one of the source and drain of the transfer gate transistor constituting the switching unit 61 is connected to the data line 51 a (51 b or 51 c). In addition, the other of the source and the drain of the transfer gate transistor constituting the switching unit 61, the input part of the inverter 60a constituting the latch unit 60, and the output part of the inverter 60b are connected together.

In addition, in this embodiment, in the selection circuit 7, first and second signal switching units 71, 72 are disposed. The first signal switching unit 71 is formed of a transfer gate transistor in which an n-type transistor 71 a and a p-type transistor 71 b are connected in parallel with each other. Similarly, the second signal switching unit 72 is formed of a transfer gate transistor in which an n-type transistor 72a and a p-type transistor 72b are connected in parallel with each other. In addition, one of a source and a drain of the transfer gate transistor forming the first signal switching unit 71 and the first signal line 52a are connected together, and one of a source and a drain of the transfer gate transistor forming the second signal switching unit 72 and the second signal line 52b are connected together. In addition, the other of the source and the drain of the transfer gate transistor forming the first signal switching unit 71, the other of the source and the drain of the transfer gate transistor forming the second signal switching unit 72, and the signal line 12 are connected together. In addition, a gate of the n-type transistor 71 a of the first signal switching unit 71 and the gate of the p-type transistor 72b of the second signal switching unit 72 are connected together. In addition, the gate of the p-type transistor 71 b of the first signal switching unit 71 and the gate of the n-type transistor 72a of the second signal switching unit 72 are connected together.

Next, a writing operation of the liquid crystal display device 100 according to an embodiment of the invention will be described with reference to Figs. 1 to 3.

First, an operation for supplying (writing) a video signal to one display pixel 10 will be described. In this embodiment, a writing operation for the display pixel 10 corresponding to the red color will be described. However, an operation for writing a signal into the display pixel 10 corresponding to the green color or the blue color is the same as that corresponding to the red color.

As shown in Fig. 1, for example, when video data RENB of level H (display) is supplied to the latch circuit 6 corresponding to the red color of the first set, simultaneously a scanning signal is supplied to the switching unit 61 of the latch circuit 6 from the driving IC 2 (see Fig. 3). Then, as shown in Fig. 2, the gates of the n-type transistor 61 a and the p-type transistor 61 b of the switching unit 61 are opened in accordance with a scanning signal from the driving IC 2, and thereby the switching unit 61 constituted by the n-type transistor 61 a and the p-type transistor 61 b is in the ON state. Accordingly, the video data is supplied to the latch unit 60 through the switching unit 61. At this moment, the video data of level H is converted in to level L by the inverter 60a of the latch unit 60. Accordingly, a node N1 that is located on the input part side of the inverter 60a and the output part side of the inverter 60b is maintained at level H in accordance with the video data, and a node N2 that is located on the output part side of the inverter 60a and the input part side of the inverter 60b is maintained at level L in accordance with the video data. Accordingly, the video data is stored (latched) in the latch unit 60. Then, the stored video data is supplied to the selection circuit 7 in the stored state. In other words, of the stored video data, data maintained at the node N1 in the H-level state is supplied to the gate of the n-type transistor 71a of the first signal switching unit 71 and the gate of the p-type transistor 72b of the second signal switching unit 72. Simultaneously with the above-described operation, data that is converted into level L and maintained at the node N2 is supplied to the gate of the p-type transistor 71 b of the first signal switching unit 71 and the gate of the n-type transistor 72a of the second signal switching unit 72. In such a case, the gates of the n-type transistor 71 a to which the signal of level H is supplied and the p-type transistor 71 b to which the signal of level L is supplied are opened, and thereby the first signal switching unit 71 constituted by the n-type transistor 71 a and the p-type transistor 71 b is in the ON state. Accordingly, the first signal line 52a and the signal line 12 are connected together. Then, a video signal (signal for display color) for which the liquid crystal molecules are aligned for transmitting light to the monitor surface is written in the pixel electrode 10b through the signal line 12 from the first signal line 52a.

On the other hand, in a case where the video data RENB of level L (no display) is supplied from the driving IC 2, when the video data RENB is stored in the latch unit 60, the video data is converted in to level H by the inverter 60a. Accordingly, the video data is maintained at level L in the node N1 that is located on the input part side of the inverter 60a and the output part side of the inverter 60b and is maintained at level H in the node N2 that is located on the output part side of the inverter 60a and the input part side of the inverter 60b, and thereby the video data is stored. Then, of the stored video data, the data maintained at the node N1 in the L-level state is supplied to the gate of the n-type transistor 71 a of the first signal switching unit 71 and the gate of the p-type transistor 72b of the second signal switching unit 72. Simultaneously with the above-described operation, the video data that is converted into level H and maintained at the node N2 is supplied to the gate of the p-type transistor 71 b of the first signal switching unit 71 and the gate of the n-type transistor 72a of the second signal switching unit 72. In such a case, the gates of the n-type transistor 72a and the p-type transistor 72b are opened, and thereby the second signal switching unit 72 constituted by the n-type transistor 72a and the p-type transistor 72b is in the ON state. Accordingly, the second signal line 52b and the signal line 12 are connected together. Then, a video signal (signal for no color display) for which the liquid crystal molecules are aligned for not transmitting light to the monitor surface is written into the pixel electrode 10b through the signal line 12 from the second signal line 52b.

Next, the writing operation of the liquid crystal display device 100 for one horizontal period will be described. As shown in Fig. 1, for one horizontal period, in a case where n sets of latch circuits 6 are disposed with one set constituted by three latch circuits 6, the video data from the driving IC 2 is sequentially supplied to the latch circuits 6, and scanning signals are sequentially supplied from the H driver 3 to the latch circuit 6 of the first set to the latch circuit 6 of the n-th set. Here, by synchronizing the driving IC 2 with a clock signal (not shown), the driving IC 2 is controlled so as to supply a scanning signal corresponding to the latch circuit 6 of the k-th set when the video data is supplied to the latch circuit 6 of the k-th set (1 ≤ k ≤ n).

In particular, within the writing period of one horizontal period, as shown in Fig. 3, the video data is supplied to the latch circuit 6 of the first set, and a scanning signal is supplied from an LATSW1 (latch switch 1) of the driving IC 2 to the latch circuit 6 of the first set. Accordingly, the switching unit 61 (see Fig. 2) of the latch unit 60 inside the latch circuit 6 becomes in the ON state, and the video data is stored (latched) in the latch unit 60. Then, the video data is supplied to the selection circuit 7 in the state that the video data is stored in the latch unit 60. When the video data is level H, the first signal switching unit 71 of the selection circuit 7 becomes in the ON state. On the other hand, when the video data is level L, the second signal switching unit 72 of the selection circuit 7 becomes in the ON state. Here, during the writing period, the gate of the pixel transistor 10a is controlled to be in the ON state in accordance with an ON signal from the V driver 4. Accordingly, the video signal is supplied to the pixel electrode 10b through the signal line 12 and the pixel transistor 10a so as to start the writing operation. Then, of the display pixels 10 of one line, writing operations for the display pixels 10 corresponding to the latch circuit 6 of the first set to the display pixels 10 corresponding to the latch circuit 6 of the n-th set are sequentially started.

Here, in this embodiment, the video data stored in the latch circuit 6 is continuously maintained for one horizontal period, and the gate of the pixel transistor 10a is controlled to be continuously opened within the writing period by the V driver 4. Accordingly, for the display pixels 10 corresponding to the latch circuit 6 in which the data is maintained, a writing operation is continuously performed within the writing period from a time point when the data is started to be maintained. In addition, the video data stored in the latch circuit 6 is continuously maintained until a scanning signal is supplied to the latch circuit 6 for writing data for the next line and video data is newly stored into the display pixels 10 of the next line.

In addition, according to this embodiment, for one horizontal period, the V driver 4 controls the pixel transistor 10a to be in the ON state not only for the writing period but also a predetermined period (period A shown in Fig. 3) within a blanking interval that immediately follows the writing period. In addition, the predetermined period A is a period in which the writing operation for the display pixel 10, for which the writing operation is performed last in the writing period for one horizontal period, can be completed. In particular, for example, when one horizontal period is about 190 µs, the period A is about 13 to 18 µs. It is preferable that the predetermined period A is set to an appropriate value by using the liquid crystal capacitor, the auxiliary capacitor, and the drain line capacitor.

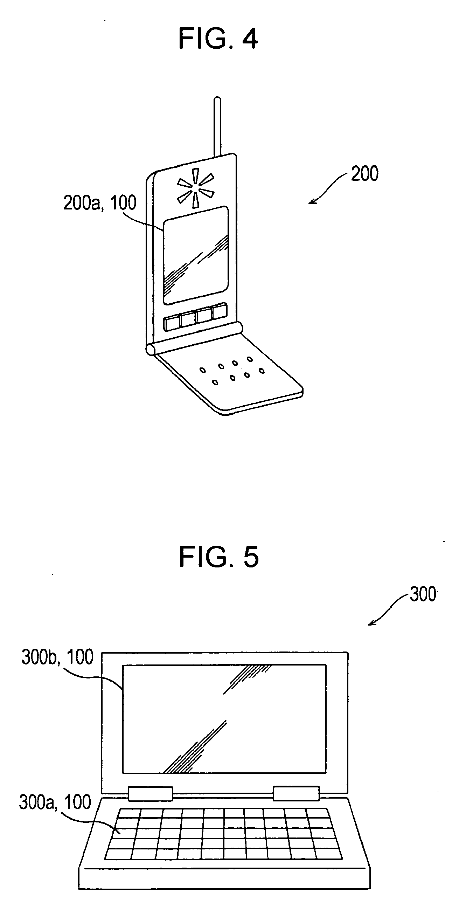

Figs. 4 and 5 are diagrams showing an example and another example of an electronic apparatus using a liquid crystal display device according to embodiments of the invention. Next, electronic apparatuses using the liquid crystal display device 100 according to an embodiment of the invention will be described with reference to Figs. 4 and 5.

As shown in Figs. 4 and 5, the liquid crystal display device 100 according to an embodiment of the invention can be used in a cellular phone 200, a PC (personal computer) 300, or the like. In the cellular phone 200 shown in Fig. 4, the liquid crystal display device 100 according to an embodiment of the invention is used as a display screen 200a. In addition, in the PC 300 shown in Fig. 5, the liquid crystal display device 100 can be used as an input unit such as a keyboard 300a, a display screen 300b, or the like. When each of the electronic apparatuses is driven by a battery or the like, the lifetime of the battery can be extended by using a reflective-type liquid crystal panel that does not use a light source. In addition, by building a peripheral circuit in a substrate inside a liquid crystal panel, the number of parts can be decreased markedly and lightweight and miniaturization of the main body of the apparatus can be implemented.

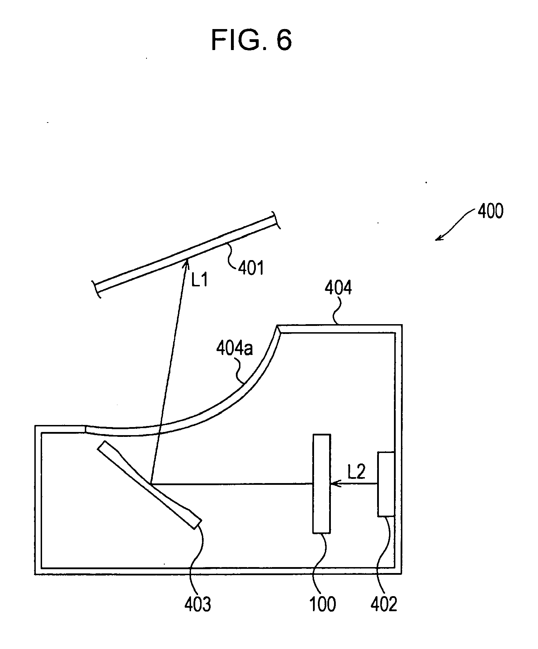

Fig. 6 is a diagram showing a new example of an electronic apparatus using a liquid crystal display device according to an embodiment of the invention. Next, an electronic apparatus using a liquid crystal display device 100 according to an embodiment of the invention will be described with reference to Fig. 6.

The liquid crystal display device 100 according to the embodiment of the invention, as shown in Fig. 6, can be used in a head-up display 400. The liquid crystal display device 100 is installed to a predetermined device so as to emit display light L1 to a target display medium (for example, front glass of a vehicle) 401. In particular, the liquid crystal display device 100 is disposed between a back light 402 and a concave mirror 403. The display light L1 emitted from the liquid crystal display device 100 is generated by incidence of light L2 that is emitted from the back light 402 to the liquid crystal display device 100. Then, the display light L1 emitted from the liquid crystal display device 100 is reflected to the target display medium 401 side by the concave mirror 403 so as to be transmitted to the target display medium 401. In addition, the liquid crystal display device 100, the back light 402, and the concave mirror 403 are housed inside a case 404 having a window unit 404a used for transmitting the display light L1. The above-described head-up display 400 used for vehicles is used for displaying information (for example, speed information, the number of engine revolutions, various types of warning information, road information or road guide information, information on an obstacle such as a person or an object, or the like) needed for driving a vehicle. Such information display needs to be clearly viewed by a driver, and accordingly binary display is appropriate. Since the liquid crystal display device 100 according to this embodiment is a display device for performing binary display, it may be used as a liquid crystal display device appropriate for the head-up display 400.

According to this embodiment, as described above, the liquid crystal display device is configured to include the latch circuit 6 that stores video data based on a scanning signal from the H driver 3 and the selection circuit 7 to which signals formed of two values including level H and level L is supplied and which selects one of the signals formed of two values based on the video data stored in the latch circuit 6 and supplies the selected signal to the signal line 12 as a video signal. Accordingly, during a period in which the video data is stored in the latch circuit 6, an signal is selected all the time and the selected signal can be continuously supplied to the signal line 12 as the video signal. Accordingly, even when the resolution increases, the writing period for each display pixel 10 can be extended. As a result, differently from a case where video signals are sequentially written for each predetermined period by using a point-sequential method, a writing operation can be sufficiently performed for each display pixel 10.

In addition, according to this embodiment, for a period in which the video data is stored in the latch circuit 6, an signal is configured to be selected based on the video data stored in the latch circuit 6 by the selection circuit 7 and be supplied to the signal line 12. Accordingly, the writing period (a period for supplying the video signal to the signal line 12) according to an embodiment of the invention which is the period for supplying data by using the latch circuit 6 can be extended in an easy manner, compared to a writing period (a period for supplying the video signal to the signal line 12) by using a dot-sequential method in which a scanning period of the H driver 3 for one signal line 12 becomes the writing period for each display pixel 10.

In addition, according to this embodiment, as described above, it is configured that the video data stored in the latch circuit 6 is maintained for one horizontal period, an signal is selected by the selection circuit 7 based on the video data maintained for one horizontal period, and the selected signal is supplied to the signal line 12 for one horizontal period. Accordingly, the signal that is selected based on the maintained video data can be supplied to the signal line 12 for one horizontal period. Thus, by maintaining the gate of the pixel transistor 10a to be in the ON state in that period, a writing operation for each display pixel 10 can be configured to be performed for a long time in an easy manner.

In addition, according to this embodiment, as described above, the latch circuit 6 is configured to include the latch unit 60 that is connected to the selection circuit 7 and stores the video data and a switching unit 61 that is connected between the data line 51 supplying the video data and the latch unit 60 and electrically connects the data line 51 and the latch unit 60 based on the scanning signal from the H driver 3. Accordingly, by performing on/off control for the switching unit 61 using the sequentially supplied scanning signals, timings for storing the video data in the latch unit 60 can be configured to be different for each signal line 12. Thus, timings for starting supply of the video data in a case where the signal is supplied to each signal line 12 as a video signal based on the video data stored in the latch unit 60 can be configured to be different for each signal line 12. Accordingly, a writing operation of a video signal for each display pixel 10 can be sequentially performed in an easy manner.

In addition, according to this embodiment, as described above, one set that is configured by the latch circuit 6 and the selection circuit 7 is disposed for each signal line 12. Accordingly, the video signal can be supplied to each signal line 12 for a long time by using the latch circuit 6 and the selection circuit 7 in an easy manner.

In addition, according to this embodiment, as described above, when the video data of level H is maintained in the latch circuit 6, the first signal switching unit 71 becomes in the ON state, and whereby an signal is supplied from the first signal line 52a to the signal line 12 as a video signal. On the other hand, when the video data of level L is maintained in the latch circuit 6, the second signal switching unit 72 becomes in the ON state, and whereby an signal is supplied from the second signal line 52b to the signal line 12 as a video signal. Accordingly, in a state that one of the video data of level H and the video data of level L is maintained in the latch circuit 6, a switching unit between the first signal switching unit 71 and the second signal switching unit 72 that is in correspondence with a level of the maintained video data becomes in the ON state, and the video signal is supplied to the signal line 12 through the switching unit that is in the ON state. Thus, a video signal can be selected automatically in accordance with the video data and can be supplied to the signal line 12. Accordingly, writing a video signal into the display pixel 10 can be performed without performing a complicated control operation.

In addition, according to this embodiment, as described above, the selection circuit 7 and the signal line 12 are configured to be directly connected to each other, not through a switching circuit. Accordingly, when a video signal is supplied to the signal line 12, a switching circuit such as an H switch is not needed to be disposed, and thereby complexity of the circuit configuration between the selection circuit 7 and the signal line 12 can be suppressed.

In addition, according to this embodiment, the scanning signals are configured to be simultaneously supplied to the latch circuits 6 corresponding to the signal lines 12 that are in correspondence with the display pixels 10 of the red color, the green color, and the blue color that constitute one pixel from the H driver 3. Accordingly, operations for storing the video data in the latch circuits 6 corresponding to the signal lines 12 that are in correspondence with the display pixels 10 of the red color, the green color, and the blue color that constitute one pixel can be performed simultaneously.

In addition, according to this embodiment, in one horizontal period constituted by the writing period of the gate line 11 for writing the video signal into the display pixels 10 of one line and the blanking interval required for transiting to a writing operation for the next line from a writing operation for the line in which the writing operation for the display pixels 10 is completed, the V driver 4 is configured to control the pixel transistor 10a to be in the ON state not only for the writing period but also for a predetermined period (period A shown in Fig. 3) within the transition period immediately following the writing period. Accordingly, in the one horizontal period, the writing operation for the display pixel 10, for which the writing operation is performed late in the one horizontal period, can be performed in the predetermined period A within the transition period, and thereby long writing periods for all the display pixels 10 can be acquired. As a result, the writing operations for all the display pixels 10 can be performed sufficiently.

In addition, according to this embodiment, as described above, the predetermined period A of the blanking interval is set such that the writing operation for the display pixel 10, for which the writing operation is performed last in the writing period of one horizontal period, can be completed. Accordingly, the writing periods for all the display pixels 10 can be sufficiently acquired for performing the writing operation for the display pixels 10 of one line.

In addition, according to this embodiment, as described above, the V driver 4, the latch circuit 6, the selection circuit 7, and the H driver 3 are disposed inside the liquid crystal panel 50. Accordingly, a simplified structure and miniaturization of the device, compared to a case where the above-described circuits are disposed outside the liquid crystal panel 50, can be implemented.

In addition, the embodiments disclosed here should be considered as examples and not for purposes of limitation. Therefore, the scope of the invention is defined not by the detailed description but by the appended claims, and includes the scope equivalent to the claims and all changes within the scope.

For example, according to the above-described embodiment, the switching unit 61 of the latch circuit 6 is configured by a transfer gate transistor formed of two transistors including the n-type transistor 61 a and the p-type transistor 61 b, as an example. However, the present invention is not limited thereto, and the transfer gate transistor may be formed of one transistor.

In addition, according to this embodiment, an example in which the video data of level H is a signal corresponding to a video signal for displaying color and the video data of level L is a signal corresponding to a signal for not displaying color has been described. However, the invention is not limited thereto, and it may be configured that the video data of level H is a signal corresponding to a video signal for not displaying color and the video data of level L is a signal corresponding to a signal for displaying color.

The foregoing description has been given by way of example only and it will be appreciated by a person skilled in the art that modifications can be made without departing from the scope of the present invention.

## Claims

1. A liquid crystal display device (100) comprising:
a plurality of gate lines (11);
a plurality of signal lines (12);
a scanning unit (3) adapted to sequentially scan lines corresponding to the plurality of signal lines;
a memory circuit (6) adapted to store video data based on a scanning signal from the scanning unit; and
a selection circuit (7) adapted to be supplied with signals formed of two values, to select one of the signals formed of the two values based on the video data stored in the memory circuit, and to supply the selected signal to one of the plurality of signal lines as a video signal.

2. The liquid crystal display device according to Claim 1,
wherein the memory circuit (6) is configured to maintain the video data in a period longer than a scanning period of the scanning unit (3) for a line corresponding to one of the plurality of the signal lines, and
wherein, for a period in which the video data is maintained in the memory circuit, the signal is selected based on the video data stored in the memory circuit by the selection circuit and is supplied to the one of the plurality of signal lines as the video signal.

3. The liquid crystal display device according to Claim 2,
wherein the video data stored in the memory circuit (6) is maintained for a period having a length equal to the length of one horizontal period, and
wherein the selection circuit (7) selects the signal based on the video data that is maintained for the one horizontal period and supplies the selected signal to the one of the plurality of signal lines as the video signal for the one horizontal period.

4. The liquid crystal display device according to any one of the preceding claims, wherein the memory circuit (6) includes:
a memory unit (60) that is connected to the selection circuit (7) and stores the video data; and
a switching unit (61) that is connected between a data line (51) for supplying the video data and the memory unit (60) and electrically connects the data line and the memory unit based on the scanning signal from the scanning unit.

5. The liquid crystal display device according to any one of the preceding claims, wherein one set configured by the memory circuit (6) and the selection circuit (7) is disposed for each of the plurality of the signal lines (12).

6. The liquid crystal display device according to any one of the preceding claims, further comprising a first signal line (52a) that is connected to the selection circuit (7) and supplies a first signal and a second signal line (52b) that is connected to the selection circuit (7) and supplies a second signal,
wherein the signals formed of two values are formed of the first signal and the second signal,
wherein the selection circuit (7) includes a first signal switching unit (71) and a second signal switching unit (72),
wherein the first signal switching unit (71) is connected between one of the plurality of signal lines (12) and the first signal line (52a), and the second signal switching unit (72) is connected between the one of the plurality of signal lines (12) and the second signal line (52b),
wherein, when the video data corresponding to the first signal is maintained in the memory circuit (6), the first signal switching unit (71) is in an ON state so as to supply the first signal from the first signal line (52a) to the one of the plurality of signal lines (12) as the video signal, and
wherein, when the video data corresponding to the second signal is maintained in the memory circuit (6), the second signal switching unit (72) is the ON state so as to supply the second signal from the second signal line (52b) to the one of the plurality of signal lines as the video signal.

7. The liquid crystal display device according to Claim 6, further comprising:
a pixel electrode (10b) to which the video signal is applied;
an opposing electrode (10c) that is disposed to face the pixel electrode; and
an opposing electric potential supplying unit that controls the electric potential (COM) of the opposing electrode,
wherein the first signal and the second signal are alternately shifted to be supplied for each the one horizontal period from the first signal line (52a) and the second signal line (52b), and
wherein the electric potential of the opposing electrode is configured to be inverted by the opposing electric potential supplying unit simultaneously with a timing of shift between the first signal and the second signal.

8. The liquid crystal display device according to Claim 1, wherein the selection circuit (7) and the one of the plurality of signal lines (12) are directly connected to each other, not through a switching circuit.

9. The liquid crystal display device according to any one of the preceding claims, wherein scanning signals are simultaneously supplied from the scanning unit to each memory circuit corresponding to a respective one of the plurality of signal lines that is in correspondence with sub pixels of red, green, and blue colors constituting one pixel.

10. The liquid crystal display device according to any one of the preceding claims, further comprising:
a pixel transistor (10a); and
a gate line driving circuit (4) that performs on/off control for the pixel transistor through the gate line (11),
wherein, in the one horizontal period constituted by a writing period of the video signal for pixels of one line of the plurality of the gate lines and a transition period for transiting from a completed writing operation for the display pixels for a line to a writing operation for the next line, the gate line driving circuit controls the pixel transistor to be in the ON state not only for the writing period but also for a predetermined period within the transition period immediately following the writing period.

11. The liquid crystal display device according to Claim 10, wherein the predetermined period of the transition period is a period in which a writing operation for the pixel, for which the writing operation is performed last in the writing period of the one horizontal period, can be completed.

12. The liquid crystal display device according to any one of claims 1 to 9, further comprising:
a pixel transistor (10a); and
a gate line driving circuit (4) that performs on/off control for the pixel transistor,
wherein the gate line driving circuit (4), the memory circuit (6), the selection circuit (7), and the scanning unit (3) are disposed in a liquid crystal panel including a display unit (1).

13. An electronic apparatus comprising the liquid crystal display device according to any one of the preceding claims.
